# EUROPEAN PATENT SPECIFICATION

(11) **EP 2 340 699 B1**
(45) Date of publication and mention of the grant of the patent: **04.09.2013**
(21) Application number: 10194928.7
(22) Date of filing: 14.12.2010
(51) Int. Cl.: A01B 59/00, A01B 59/04, A01B 59/042, A01B 59/06, B60D 1/46

(54) **Linkage attachment means for a vehicle**
Verbindungsbefestigungsmittel für Fahrzeuge
Support de fixation de liaison pour véhicule

(30) Priority: 31.12.2009 GB 0922696
(43) Date of publication of application: 06.07.2011
(73) Proprietor: AGCO GmbH, 87616 Marktoberdorf (DE)
(72) Inventor: Frank, Georg, 87663 Lengenwang (DE); Prestel, Stefan, 87474 Buchenberg (DE)
(74) Representative: Smith, Louise Marie

(56) References cited:
- EP-A1- 2 100 757
- DE-A1- 3 122 116
- DE-B- 1 200 594
- DE-U1-202008 006 817
- US-A- 4 429 895
- US-A1- 2004 084 877
- US-A1- 2007 000 673
- US-A1- 2007 096 428
- US-B1- 6 726 237

## Description

This invention relates to an attachment means for attaching a linkage system to a vehicle. More specifically it relates to an attachment means for attaching an upper link to an agricultural tractor.

It is known to attach linkage systems comprising two lower links and an upper link to the rear of a tractor for connection to an implement. The upper link is pivotally mounted to the rear of the transmission housing of the tractor for movement about a substantially horizontal axis. The upper link is adjustable in length as well as position. By position it is meant the height of the end of the upper link which is attached to the tractor relative to the ground.

The rear of the transmission housing is provided with three pairs of bolt holes. A pivot pin extends through one pair of bolt holes and a hole in the upper link to attach the upper link to the housing. As disclosed in US2007/0000673 the position, or height of the upper link may be altered by using a different pair of bolt holes. In order to move the link from one pair of bolt holes to another pair of bolt holes the pivot pin must be removed and the weight of the upper link be supported whilst the upper link is moved between the desired pair of bolt holes and the pivot pin replaced. The danger is that the heavy upper link is dropped causing injury to the operator, or damage to other objects around the rear of the tractor.

An earlier application of the applicant EP2100757 discloses a tractor hitch comprising a pair of support rails situated either side of a PTO (Power Take Off) shaft. The hitch is provided with two opposing locking pins which engage with holes in each of the rails to hold the hitch at a desired height.

An aim of the invention is to provide a linkage attachment arrangement for attaching a linkage system to a vehicle which makes the attachment of the upper link to a vehicle easier and safer.

According to the invention there is provided an upper linkage attachment arrangement for pivotally attaching an upper link to a tractor at a variety of heights, said arrangement comprising the features of claim 1.

The invention thus allows the user to slide the linkage attachment member and the linkage within the rail and secure it when the desired position is reached. The rail assists the user in guiding and supporting the attachment member (and linkage) whilst being moved.

Preferably, the engaging contours comprise a series of bores and the holding means may comprise a bolt or fixing pin.

Preferably, the holding means is biased towards the tractor.

As the arrangement is provided with a stop means to prevent the linkage attachment member from sliding out of the rail, even if the attachment member and/or linkage is accidentally let go during movement, the linkage attachment member and linkage will not fall to the ground but remain in the rail thus preventing damage to persons or objects nearby.

Preferably, the rail defines a channel for receiving the linkage attachment member and a portion of the channel is removed to expose a part of the linkage attachment member. This way the linkage attachment member can be accessed whilst held within the rail.

The invention will now be described by example only with reference to the following drawings in which:
Figure 1 is a rear view of the rear of a tractor provided with a linkage system comprising an upper link and two lower links,
Figure 2 is a side view of the linkage system in which an upper link is mounted to an attachment arrangement in accordance with the invention,
Figure 3 is an end view of the attachment arrangement of figure 2 without any linkage taken from below the arrangement as indicated by arrow Z in figure 2,
Figure 4 is a front end view of the attachment arrangement of figure 2 as indicated by arrow X in figure 2 without any linkage,
Figure 5 is a longitudinal cross sectional view of figure 4 along line B-B,
Figure 6 is a perspective view of the attachment arrangement of figure 3,
Figures 7a and 8a are cross sectional views along line A-A of figure 3, and
Figures 7b and 8b are cross sectional views along line C-C of figures 7a and 8a respectively.

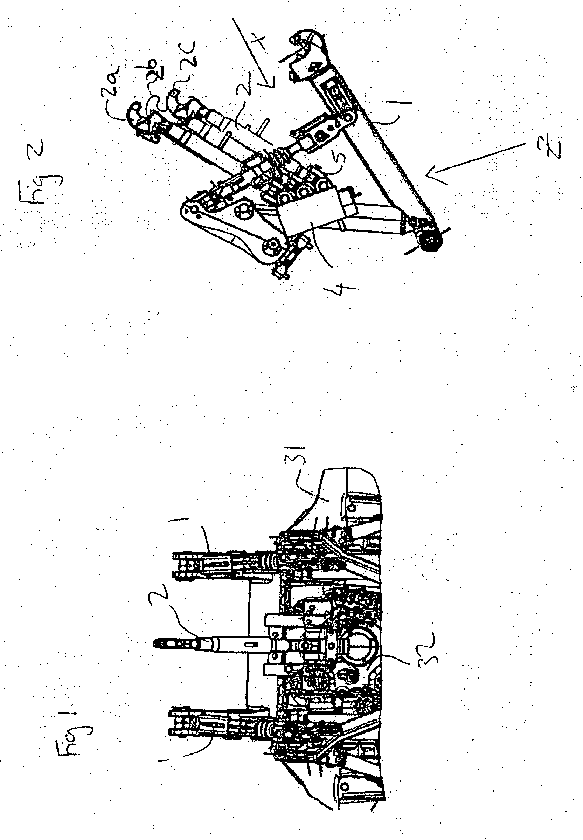

Figure 1 shows a rear view of the rear of a tractor 31 provided with a linkage system comprising two lower links 1 and an upper link 2. The links 1, 2 are attached to the rear of the transmission housing 32 of the tractor 31.

Figure 2 shows a side view of the links 1, 2 without the tractor 31. In accordance with the invention, the linkage attachment arrangement comprises a guide rail 4 which can be mounted to the tractor. Upper link 2 is pivotally connected to a linkage attachment member, or bracket 5 which can be moved in a generally vertical direction within the rail 4 between a variety of positions indicated at 2a, 2b and 2c allowing the height of upper link 2 above the ground to be varied. Whilst the drawings show a separate bracket 5 for connection to upper link 2, it would be possible for upper link 2 to be provided with a suitable integral linkage attachment member which could be mounted to the rail 4.

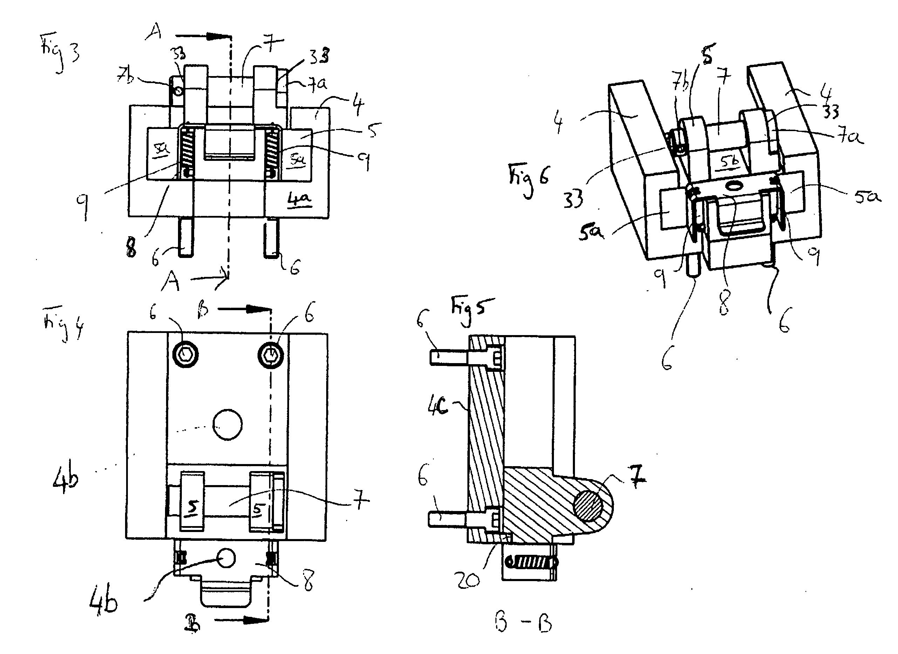

Figures 3 to 6 show the guide rail 4 and bracket 5 in further detail.

Figure 3 shows an end view of the guide rail of figure 2 from underneath as indicated by arrow Z in figure 2. Guide rail 4 is attachable to the rear of the tractor by screws 6 which connect the back wall 4c of rail 4 to the tractor. The rail 4 as viewed in figure 3, or in transverse cross section has a generally rectangular shaped rail frame 4a with a central portion missing.

The frame 4a defines a channel and encloses the end portions 5a of a bracket 5 which can be moved in a generally vertical direction within the channel when mounted on the tractor. The missing portion of the frame 4a allows a centre portion of the bracket 5b to be exposed and accessed when mounted within the rail 4. Although the embodiment described shows a generally rectangular shaped rail frame 4a other shaped rail frames, such as a circular frame could also be used. Upper link 2 (not shown) may be connected to the bracket 5 by a pivot pin 7 which extends through opposing bores 33 and the upper link 2. The pivot pin 7 is secured within the respective bores 33 by a splint pin 7b on one end and by a stop element 7b on the other end.

Figure 5 shows a stopping element 20 which is a protrusion of the back wall 4c of rail 4 into the channel. The stopping element 20 prevents bracket 5 from sliding out of rail frame 4a. A securing element 8 is provided to hold the bracket 5 (and therefore the upper link 2) in the rail in several different positions.

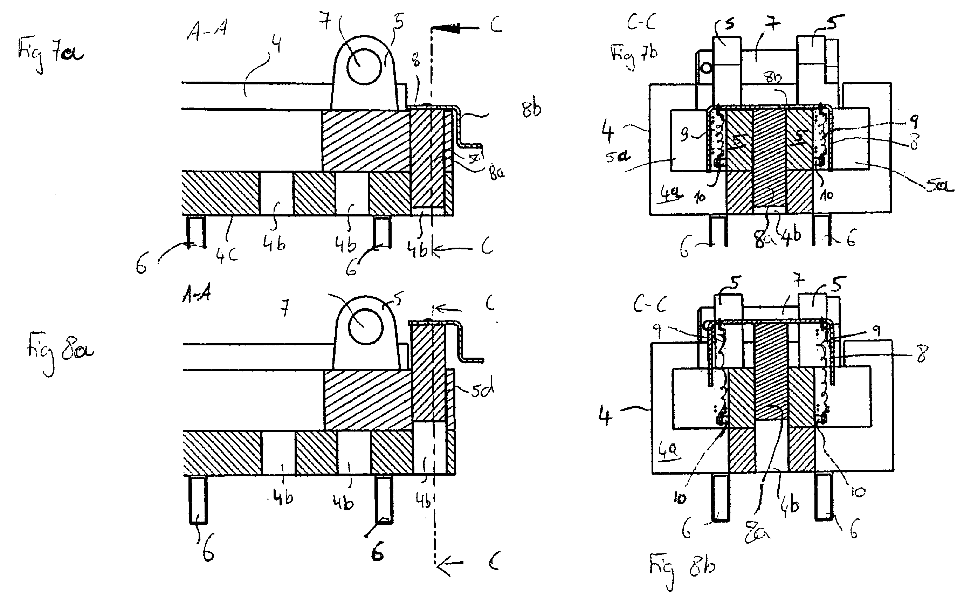

Figures 7a, 7b, 8a and 8b show the movement of the securing element 8 in detail. Figures 7a and 8a are cross sectional views along line A-A of figure 3, and Figures 7b and 8b are cross sectional views along line C-C of Figures 7a and 8a respectively.

Figures 7a and 7b show the securing element 8 in a closed position in which the bracket 5 cannot be moved. Figures 8a and 8b show the securing element in an open position in which bracket 5 and therefore upper link 2 can be moved.

Securing element 8 comprises a bolt 8a and a lug 8b which are welded together. The bolt 8a is moveable through a bore 5d in the bracket 5 and into one of a series of three receiving bores 4b provided in the back wall 4c of rail 4. Bolt 8a when inserted into a receiving bore 4b fixes the bracket 5 in the desired position. In the embodiment shown only three bores 4b are provided to hold the upper link 2 in three different positions. A greater or fewer number of receiving bores could be provided to enable the upper link to be held in more or fewer number of positions.

Securing element 8 is held within the position shown in figures 7a and 7b by two springs 9 located on either side of the bolt 8a. Springs 9 are each attached to the lug 8b of the securing element 8 and to bracket 5 with a bolt 10.

Lug 8b can be lifted against the force applied by the spring 9 to withdraw the bolt 8a from one of the bores 4b and allow the bracket 5 to be moved vertically within the rail 4. When the bracket is at the desired position within the rail, the lug can be released returning the bolt 8a to one of the bores 4b and thus holding the bracket 5 in position.

If the upper link 2, or bracket 5 is accidentally let go during positioning of the bracket, the bracket 5 and upper link 2 will at the worst slide down to the bottom of rail 4 where it will be stopped from further movement within the rail by stopping element 20. In this respect, the upper link 2 and bracket 5 will still remain attached to the tractor thus preventing damage to persons, or objects nearby.

The embodiment described provides three different upper link positions since bolt 8a can be inserted into one of three different receiving bores 4b.

## Claims

1. An upper linkage attachment arrangement for pivotally attaching an upper link 2 to a tractor at a variety of heights, said arrangement comprising a rail 4, a linkage attachment member 5 moveable in a substantially vertical direction within the rail 4 and holding means 8 for holding the linkage attachment member at a desired height within the rail, the rail provided with engaging contours for engagement with the holding means 8, **characterised in that** the rail 4 has a back wall 4c for attachment to the tractor, the holding means 8 is attached to the linkage attachment member 5 by spring means 9 and the arrangement is provided with stop means 20 to prevent the linkage attachment member 5 from sliding out of the rail 4.

2. A linkage attachment arrangement as claimed in claim 1 wherein the engaging contours comprise a series of bores 4b.

3. A linkage attachment arrangement as claimed in any preceding claim wherein the holding means 8 comprises a bolt 8a.

4. A linkage attachment arrangement as claimed in any preceding claim wherein the holding means 8 is biased towards the tractor.

5. A linkage attachment arrangement as claimed in any preceding claim wherein the rail 4 defines a channel for receiving the linkage attachment member 5 and a portion of the channel is removed to expose a part of the linkage attachment member 5.

## Patentansprüche

1. Obere Befestigungseinrichtung für eine Verbindung zur verschwenkbaren Befestigung einer oberen Verbindung 2 an einem Traktor oder Zugfahrzeug an unterschiedlichen Höhen, wobei die Befestigungseinrichtung eine Schiene 4, ein Befestigungselement 5 für die Verbindung, welches in eine im Wesentlichen vertikale Richtung mit, in oder gegenüber der Schiene 4 bewegbar ist, und mindestens ein Halteorgan 8 zum Halten des Befestigungselements in einer gewünschten Höhe in oder entlang der Schiene aufweist, wobei die Schiene ausgestattet ist mit eingreifenden oder in Wechselwirkung tretenden Konturen, die dem Eingreifen in das oder der Ausbildung einer Wechselwirkung mit dem mindestens eine(n) Halteorgan 8 dienen, **dadurch gekennzeichnet, dass** die Schiene 4 eine rückseitige Wandung 4c für eine Befestigung an dem Traktor oder Zugfahrzeug besitzt, dass das mindestens eine Halteorgan 8 an dem Befestigungselement 5 durch mindestens ein Federorgan 9 befestigt ist und die Befestigungseinrichtung mit mindestens einem Stopp-Organ 20 ausgestattet ist, welches der Vermeidung dient, dass das Befestigungselement 5 aus der Schiene 4 herausgleitet.

2. Befestigungseinrichtung nach Anspruch 1, wobei die in Wechselwirkung tretenden oder eingreifenden Konturen mehrere Bohrungen 4b aufweisen.

3. Befestigungseinrichtung nach einem der vorhergehenden Ansprüche, wobei das mindestens eine Halteorgan B einen Bolzen 8a aufweist.

4. Befestigungseinrichtung nach einem der vorhergehenden Ansprüche, wobei das mindestens eine Halteorgan 8 in Richtung des Zugfahrzeugs oder Traktors beaufschlagt ist.

5. Befestigungseinrichtung nach einem der vorhergehenden Ansprüche, wobei die Schiene 4 einen Kanal bildet, der der Aufnahme des Befestigungselements 5 dient, und ein Bereich des Kanals entfernt ist zur Freigabe eines Teils des Befestigungselements 5.

## Revendications

1. Agencement de fixation de liaison supérieure destiné à fixer de manière à pouvoir pivoter une biellette supérieure (2) sur un tracteur à une variété de hauteurs, ledit agencement comprenant un rail (4), un élément de fixation de liaison (5) pouvant être déplacé dans une direction sensiblement verticale à l'intérieur du rail (4) et un moyen de retenue (8) destiné à retenir l'élément de fixation de liaison à une hauteur désirée à l'intérieur du rail, le rail présentant des profils de couplage destinés à assurer le couplage avec le moyen de retenue (8), **caractérisé en ce que** le rail (4) présente une paroi arrière (4c) destinée à assurer la fixation sur le tracteur, le moyen de retenue (8) est fixé sur l'élément de liaison (5) par des moyens élastiques (9) et l'agencement est équipé de moyens d'arrêt (20) destinés à empêcher l'élément de fixation de liaison (5) de glisser hors du rail (4).

2. Agencement de fixation de liaison selon la revendication 1, dans lequel les profils de couplage comprennent une série d'alésages (4b).

3. Agencement de fixation de liaison selon l'une quelconque des revendications précédentes, dans lequel le moyen de retenue (8) comprend une vis (8a).

4. Agencement de fixation de liaison selon l'une quelconque des revendications précédentes, dans lequel le moyen de retenue (8) est préchargé vers le tracteur.

5. Agencement de fixation de liaison selon l'une quelconque des revendications précédentes, dans lequel le rail (4) définit un canal destiné à recevoir l'élément de fixation de liaison (5) et une partie du canal est retirée afin d'exposer une partie de l'élément de fixation de liaison (5).
